# EUROPEAN PATENT APPLICATION

(11) **EP 4 403 428 A1**
(43) Date of publication of application: **24.07.2024**
(21) Application number: 23152817.5
(22) Date of filing: 23.01.2023
(51) Int. Cl.: B60W 10/06, B60W 10/08, B60W 20/16, B60W 30/188, B60W 40/06

(54) **SYSTEM AND METHOD OF CONTROLLING A HYBRID VEHICLE**

(71) Applicant: VOLVO TRUCK CORPORATION, 405 08 Göteborg (SE)
(72) Inventor: HÖGSTRÖM, Åsa, 417 04 Göteborg (SE); SVRAKA, Irman, 417 53 Göteborg (SE)
(74) Representative: Kransell & Wennborg KB

(57) **Abstract**

The inventive concept relates to a computer system comprising a processor device configured to monitor a current level of NOx emissions exhausted from an aftertreatment system of an engine system of a vehicle, estimate a level of NOx emissions exhausted from the aftertreatment system within a predetermined time period based on an operating condition of the engine system of the vehicle, and in response to the estimated level of NOx emissions exceeding a predetermined threshold limit: transmit first operation data to an electric traction motor of the vehicle, the first operation data represents instructions to the electric traction motor to generate a propulsion torque on at least one wheel of the vehicle, and contemporaneously transmit second operation data to an internal combustion engine of the engine system, the second operation data represents instructions to reduce a torque generated by the internal combustion engine.

## Description

### TECHNICAL FIELD

The inventive concept relates generally to a hybrid vehicle. In particular aspects, the inventive concept relates to a computer system of controlling operation of an electric traction motor and an internal combustion engine in response to estimated NOx emissions exceeding a predetermined threshold limit. The inventive concept can be applied in heavy-duty vehicles, such as trucks, buses, and construction equipment. Although the inventive concept may be described with respect to a particular vehicle, the inventive concept is not restricted to any particular vehicle.

### BACKGROUND

Aftertreatment systems are conventionally incorporated downstream an internal combustion engine of a vehicle in order to reduce exhaustion of environmentally harmful gases to the ambient environment. The aftertreatment system may, for example, comprise an oxidation catalyst which is arranged to convert nitric oxides to nitrogen dioxides. A particle filter may also be provided further downstream the oxidation catalyst.

One approach to further reduce emission of environmentally harmful exhaust gases, hybrid vehicles are increasingly popular where the vehicle can be propelled by either or both of an internal combustion engine and an electric traction motor. However, there are still operating conditions where such hybrid vehicle may exhaust too high levels of harmful emissions, such as NOx emissions.

### SUMMARY

According to a first aspect of the inventive concept, there is provided a computer system comprising a processor device configured to monitor a current level of NOx emissions exhausted from an aftertreatment system of an engine system of a vehicle, estimate a level of NOx emissions exhausted from the aftertreatment system within a predetermined time period based on an operating condition of the engine system of the vehicle, and in response to the estimated level of NOx emissions exceeding a predetermined threshold limit: transmit first operation data to an electric traction motor of the vehicle, the first operation data represents instructions to the electric traction motor to generate a propulsion torque on at least one wheel of the vehicle, and contemporaneously transmit second operation data to an internal combustion engine of the engine system, the second operation data represents instructions to reduce a torque generated by the internal combustion engine.

The first aspect of the inventive concept may seek to reduce the risk of high levels of NOx emissions being exhausted to the ambient atmosphere. A technical benefit may include that a reduced level of NOx emissions is exhausted to the ambient environment while maintaining a desired drivability of the vehicle. Reducing NOx emissions has previously been solved by reducing engine out NOx emissions. However, this comes at a cost of higher fuel consumption. The inventive concept on the other may enable for a maintained vehicle speed with reduced NOx emissions, as well as reduced fuel consumption.

The operating condition of the engine system may e.g. be an engine torque, an engine speed, an engine temperature, etc.

Further, and as described above, the predetermined time period is based on the operating condition of the engine system. The predetermined time period may hence be different from one operating condition to another. The predetermined time period may thus not be construed as fixed time period valid for all operating conditions and all drive cycles, but could be different from one time to another.

According to a second aspect, there is provided a computer-implemented method, comprising monitoring, by a processor device of a computer system, a current level of NOx emissions exhausted from an aftertreatment system of an engine system of a vehicle, estimating, by the processor device, a level of NOx emissions exhausted from the aftertreatment system within a predetermined time period based on an operating condition of the engine system of the vehicle, and in response to the estimated level of NOx emissions exceeding a predetermined threshold limit: transmitting, by the processor device, first operation data to an electric traction motor of the vehicle, the first operation data represents instructions to the electric traction motor to generate a propulsion torque on at least one wheel of the vehicle, and contemporaneously transmitting, by the processor device, second operation data to an internal combustion engine of the engine system, the second operation data represents instructions to reduce a torque generated by the internal combustion engine.

The second aspect of the inventive concept may, in a similar vein as the first aspect, seek to reduce the risk of exhaust a high levels of NOx emissions to the ambient atmosphere. A technical benefit may include that a reduced level of NOx emissions is exhausted to the ambient environment while maintaining sufficient drivability of the vehicle. Reducing NOx emissions has previously been solved by reducing engine out NOx emissions. However, this comes at a cost of higher fuel consumption. The inventive concept on the other may enable for a maintained vehicle speed with reduced NOx emissions, as well as reduced fuel consumption.

In some examples, the second operation data may represent instructions to reduce the torque by the internal combustion engine at a torque level corresponding to a level of propulsion torque generated by the electric traction motor. The total torque obtained by the electric traction motor and the internal combustion engine before reducing the torque on the combustion engine may thus be the same as the total torque obtained after reducing the torque on the combustion engine.

In some examples, the second operation data may represent instructions to reduce the torque by the internal combustion engine to zero. A technical benefit may be that the NOx emissions is reduced to zero.

In some examples, the estimated level of NOx emissions may be determined by determining, by the processor device, a level of NOx emissions exhausted from the aftertreatment system at an incremental point in time after the current point in time, determining, by the processor device, a derivative value of the increase of NOx emissions from the current point in time to the incremental point in time, and estimating, by the processor device, the level of NOx emissions exhausted from the aftertreatment system within the predetermined time period based on the derivative value.

A technical advantage may be that a rapid estimation of a possible level of NOx emissions at an updated point in time can be made. Thus, rapid actions can be made to quicky suppress the level of NOx emissions.

In some examples, the method may further comprise determining, by the processor device, a topography of an upcoming road to be travelled by the vehicle during the predetermined time period, and estimating, by the processor device, the level of NOx emissions exhausted from the aftertreatment system within the predetermined time period based the topography.

In some examples, the method may further comprise estimating, by the processor device, a torque level of the internal combustion for operating the vehicle at the topography of the upcoming road at a desired vehicle speed, and estimating, by the processor device, the level of NOx emissions exhausted from the aftertreatment system within the predetermined time period based the torque level at the upcoming road. The processor device may, alternatively or as a complement, determine a load of the engine system, or an energy consumption of the engine system, at the upcoming road, and to estimate the level of NOx emissions exhausted from the aftertreatment system based on the load and/or energy consumption of the engine system.

A technical benefit may be that the engine system can be controlled prior to arriving at the upcoming road. Thus, the level of NOx emissions can be further suppressed before arriving at the upcoming road.

In some examples, the engine system may comprise a NOx sensor arranged in the aftertreatment system, the current level of NOx emissions being based on data received by the processor device from the NOx sensor.

In some examples, the aftertreatment system may comprise a selective catalytic reduction arrangement. A technical advantage may be that the NOx can be converted into e.g. diatomic nitrogen (N₂) and water.

In some examples, the NOx sensor may be arranged upstream the selective catalytic reduction arrangement. A technical advantage may be that the level of NOx emissions entering the selective catalytic reduction arrangement can be obtained.

In some examples, the estimated level of NOx emissions exhausted from the aftertreatment system within the predetermined time period may be based on sensor data received from the NOx sensor in combination with an amount of reducing agent provided in the selective catalytic reduction arrangement. Thus, a prediction of the level of NOx conversion in the selective catalytic reduction arrangement can be made to estimate a level of exhausted NOx emissions.

In some examples, the current level of NOx emissions may be derived from a current torque and rotational speed of the internal combustion engine.

In some examples, the operating condition of the engine system may comprise torque and rotational speed of the internal combustion engine.

In some examples, the method may further comprise receiving, by the processing device, a conversion ratio of nitric oxides to nitrogen dioxides by an oxidation catalyst of the aftertreatment system.

In some examples, the conversion ratio may be received from a computer model and associated with an exhaust gas condition of the exhaust gas from the internal combustion engine. The computer model may thus present an estimation for various exhaust gas conditions, such as e.g. engine speed, engine torque, and/or mass flow rate. The computer model may be pre-programmed and based on e.g. age of the selective catalytic reduction arrangement.

Further effects and features of the second aspect are largely analogous to those described above in relation to the first aspect.

According to a third aspect, there is provided a vehicle comprising a processor device configured to perform the method of any of the examples described above in relation to the second aspect.

According to a fourth aspect, there is provided a computer program product comprising program code for performing, when executed by a processor device, the method of any of the examples described above in relation to the second aspect.

According to a fifth aspect, there is provided a control system comprising one or more control units configured to perform the method of any of the examples described above in relation to the second aspect.

According to a sixth aspect, there is provided a non-transitory computer-readable storage medium comprising instructions, which when executed by a processor device, cause the processor device to perform the method of any of the examples described above in relation to the second aspect.

Effects and features of the third, fourth, fifth and sixth aspects are largely analogous to those described above in relation to the first and second aspect.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the inventive concept as described herein. There are also disclosed herein control units, computer readable media, and computer program products associated with the above discussed technical benefits.

### BRIEF DESCRIPTION OF THE DRAWINGS

With reference to the appended drawings, below follows a more detailed description of aspects of the inventive concept cited as examples.
Fig. 1 is an exemplary illustration of a vehicle according to one example,
Fig. 2 is an exemplary illustration of an aftertreatment system according to one example,
Fig. 3 is an exemplary graph illustrating NOx emissions over time according to one example,
Fig. 4 is an exemplary illustration of a method of controlling a hybrid engine system, and
Fig. 5 is a schematic diagram of an exemplary computer system for implementing examples disclosed herein, according to one example.

### DETAILED DESCRIPTION

Aspects set forth below represent the necessary information to enable those skilled in the art to practice the inventive concept.

The inventive concept described in the following may seek to mitigate the problem of extensive NOx emissions exhausted to the ambient environment. A technical benefit may thus include that a reduced level of NOx emissions is exhausted to the ambient environment while still maintaining a desirable drivability of the vehicle.

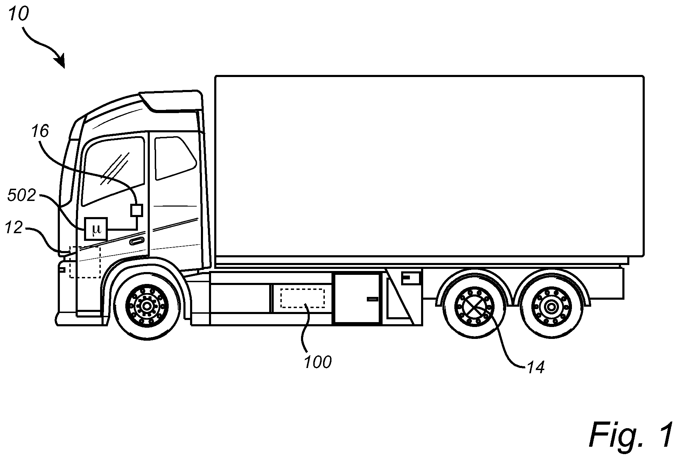

Turning to Fig. 1 which is an exemplary illustration of a vehicle 10 according to one example. As depicted in Fig. 1, the vehicle 10 is exemplified as a truck. The vehicle 10 comprises an internal combustion engine 12 and an aftertreatment system 100. The aftertreatment system 100 is arranged downstream the internal combustion engine 12 to receive exhaust gases from the internal combustion engine 12. The vehicle 10 also comprises an electric traction motor 14. Thus, the vehicle 10 is a hybrid vehicle 10 operable by either of, or a combination of, the internal combustion engine 12 and the electric traction motor 14. The internal combustion engine 12 and the electric traction motor 14 hence form part of an engine system of the vehicle 10. The vehicle 10 also comprise a processor device 502. The processor device 502 is configured to control operation of the internal combustion engine 12 and the electric traction motor 14. Further, the vehicle 10 may also comprise a positioning system 16, such as e.g. a GPS, coupled to the processor device 502. The positioning system 16 may be configured to detect the current position of the vehicle as well as to detect a topography of the upcoming road to be driven by the vehicle 10.

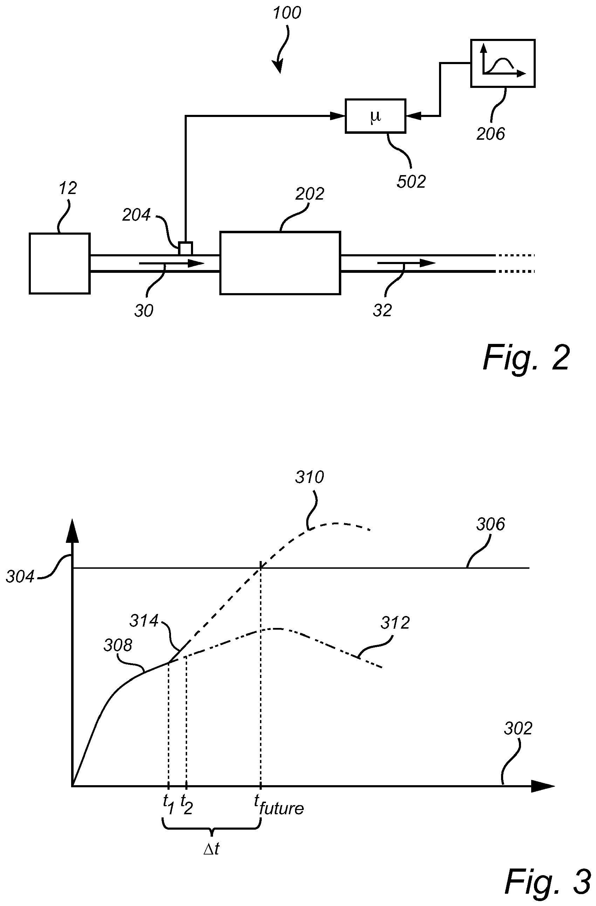

In order to describe the aftertreatment system 100 in further detail, reference is made to Fig. 2. Fig. 2 is an exemplary illustration of an aftertreatment system 100 according to one example. The following disclosure of Fig. 2 will mainly describe features of the aftertreatment system 100 which are relevant for the present inventive concept. Hence, the aftertreatment system 100 may comprise additional components which are omitted from the present disclosure, but which are well known for the person skilled in the technical art of aftertreatment systems.

As depicted in Fig. 2, the aftertreatment system 100 is arranged in downstream fluid communication with the internal combustion engine 12. Hence, combustion gas 30 exhausted from the internal combustion engine 12 is fed to the aftertreatment system 100. The exemplified aftertreatment system 100 comprises a selective catalytic reduction arrangement 202. The selective catalytic reduction arrangement 202 may advantageously convert NOx emissions in the combustion gas 30 into diatomic nitrogen and water, which are less environmentally harmful fluids.

The aftertreatment system 100 may also comprise a NOx sensor 204. The NOx sensor 204 is configured to detect the level of NOx emissions in the combustion gas 30. Preferably, and as depicted in Fig. 2, the NOx sensor 204 is arranged in upstream fluid communication with the selective catalytic reduction arrangement 202. Hence, the NOx sensor 204 detects the level of NOx emissions in the combustion gas 30 before the combustion gas 30 is fed into the selective catalytic reduction arrangement 202. The NOx sensor 204 is coupled to the processor device 502 to transmit data indicative of the current level of NOx emissions in the combustion gas 30.

Furthermore, the exemplified aftertreatment system 100 also comprises a computer model 206 coupled to the processor device 502. It should however be readily understood that the computer model 206 may form part of the processor device 502. The computer model 206 may be configured to estimate a conversion ratio of the selective catalytic reduction arrangement 202, i.e. the computer model 206 may estimate a conversion ratio of NOx emissions into e.g. diatomic nitrogen. The estimation of the computer model 206 may be based on exhaust gas condition of the combustion gas 30. The exhaust gas condition may, for example, be a temperature and/or a mass flow of the combustion gas 30. The estimation of the computer model 206 may also be based on age of the selective catalytic reduction arrangement 202, where a conversion ratio for an older selective catalytic reduction arrangement 202 is lower compared to the conversion ratio for a new selective catalytic reduction arrangement 202.

Even though a selective catalytic reduction arrangement 202 converts NOx emissions to less environmentally harmful exhaust gas, the combustion gas 32 exhausted from the aftertreatment system 100, i.e. downstream the selective catalytic reduction arrangement 202 may still contain NOx emissions. NOx emissions into the ambient environment may be caused by the internal combustion engine operated at a relatively high torque, the ability of the selective catalytic reduction arrangement 202 to convert NOx emissions into diatomic nitrogen and water, etc. The following, and with initial reference to Fig. 3, will describe a method of reducing the level of NOx emissions exhausted into the ambient environment.

Turning to Fig. 3, which is an exemplary graph illustrating NOx emissions to the ambient environment over time according to one example. The horizontal axis 302 represents time and the vertical axis 304 represents NOx emissions exhausted from the aftertreatment system 100 into the ambient environment. Fig. 3 also exemplifies a predetermined threshold limit 306 for NOx emissions. The predetermined threshold limit 306 may be based on legal requirements and the level NOx emissions exhausted from the aftertreatment system 100 should preferably be below the predetermined threshold limit 306.

During operation of the vehicle 10, when operated by the internal combustion engine 12, a current level of NOx emissions exhausted from the aftertreatment system 100 is monitored, as depicted with a solid line 308 in Fig. 3. As can be seen, the current level of NOx emissions is below the predetermined threshold limit 306. In addition to monitoring the NOx emissions, the processor device 502 estimates a level of NOx emissions exhausted from the aftertreatment system 100 within a predetermined time period Δt, i.e. from a current point in time ti to future point in time t_{future}. As exemplified in Fig. 3, the level of NOx emissions at the future point in time is estimated to exceed the predetermined threshold limit 306, which is indicated by dashed line represented with reference numeral 310.

When the processor device 502 estimates that the level of NOx emissions will exceed the predetermined threshold limit 306 within the predetermined time period Δt, the processor device 502 transmits first operation data to the electric machine 14 instructing the electric traction motor 14 to generate a propulsion torque. At the same time, the processor device 502 transmits second operation data to the internal combustion engine 12 instructing the internal combustion engine 12 to reduce its torque. By reducing the torque generated by the internal combustion engine 12 may advantageously reduce the emission of NOx to the ambient environment. The NOx emissions may hereby follow the development as indicated by the dashed lined represented with reference numeral 312. As can be seen in Fig. 3, the level of NOx emissions, when reducing the torque of the internal combustion engine 12 will not exceed the predetermined threshold limit 306. Also, when contemporaneously applying a torque by the electric traction motor 14, the vehicle 10 may be operated by the same speed as prior to reducing the torque by the internal combustion engine 12. Hence, and preferably, the second operation data may represent instructions to reduce the torque by the internal combustion engine 12 at a torque level corresponding to a level of propulsion torque generated by the electric traction motor 14. It should however be readily understood that the total torque obtained by the internal combustion engine 12 and the electric traction motor 14 may be higher or lower compared to the torque obtained by the internal combustion engine 12 prior to reducing the torque by the internal combustion engine 12 should this be desirable. If desirable and to reduce the level of NOx emissions to a greatest extent possible, the second operation data may represent instructions to reduce the torque by the internal combustion engine 12 to zero.

The estimation of NOx emissions within the predetermined time period may be determined in a number of different manners. Fig. 3 exemplifies an estimation for a relatively short time horizon, i.e. the predetermined time period Δt is within seconds or minutes from the current point in time. The processor device 502 determines a level of NOx emissions exhausted from the aftertreatment system 100 at an incremental point in time t₂ after the current point in time ti. Thus, an increase in NOx emissions from the current point in time ti to the incremental point in time t₂ can be determined or estimated. By means of the increase in NOx emissions, the processor device 502 can determine a derivative value 314 of the increase of NOx emissions. The derivative value 314 thus presents an indication of the development of the NOx emissions, and the processor device can hereby estimate if the level of NOx emissions will exceed the predetermined threshold limit 306 within the predetermined time period Δt.

The processor device 502 may also be configured to estimate the NOx emissions for a longer time horizon compared to the above example. The processor device 502 may for such prediction receive data from the positioning system 16 described above. More particularly, the processor device 502 may determine a topography of an upcoming road to be travelled by the vehicle 10 during the predetermined time period. Based on the topography, the processor device may estimate the NOx emission exhausted from the aftertreatment system when arriving at that upcoming road. In further detail, the processor device 502 may estimate a torque level of the internal combustion engine 12 for operating the vehicle 10 at the topography of the upcoming road at a desired vehicle speed. NOx emissions exhausted from the aftertreatment system can hereby be estimated based on the estimated torque level that will be applied by the internal combustion engine 12.

Furthermore, and as indicated above, the aftertreatment system 100 may preferably comprise a NOx sensor 204. Hereby, the current level of NOx emissions can be based on the data transmitted from the NOx sensor 204 to the processor device 502. The current level of NOx emissions may, as an alternative or as a complement, be derived from a current torque and rotational speed of the internal combustion engine 12. Also, the estimated level of NOx emissions exhausted from the aftertreatment system 100 within the predetermined time period Δt can also be based on sensor data received from the NOx sensor 204 in combination with an amount of reducing agent provided in the selective catalytic reduction arrangement 202. Hence, the processor device 502 may hereby receive data indicative of the current level of NOx, as well as data indicative of a conversion ratio obtainable by the selective catalytic reduction arrangement 202. The conversion ratio may be based on data received from the above described computer model 206.

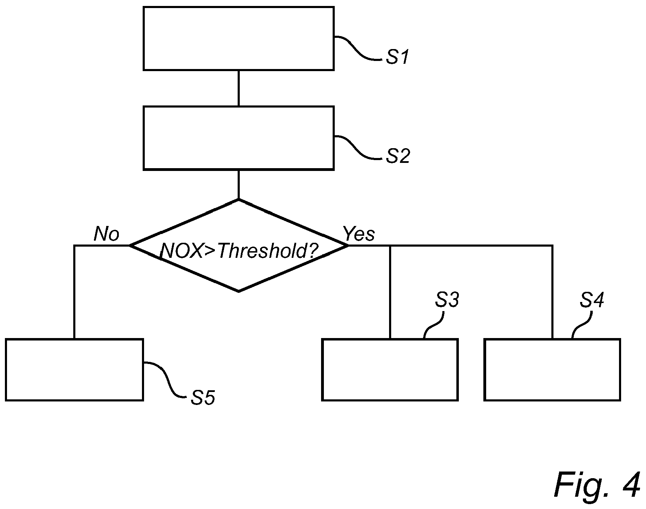

In order to sum up, reference is made to Fig. 4, which is an exemplary illustration of a method of controlling a hybrid engine system. During operation of the vehicle 10, the processor device 502 monitors S1 a current level of NOx emissions exhausted from an aftertreatment system 100. Also, the processor device 502 estimates S2 a level of NOx emissions exhausted from the aftertreatment system 100 within the above described predetermined time period Δt. If the estimated NOx emissions within the predetermined time period Δt is above the predetermined threshold limit 306, the processor device 502 transmits S3 first operation data to the electric traction motor 14 in order to cause the electric traction motor 14 to generate a propulsion torque. At the same time, the processor device 502 also transmits S4 second operation data to the internal combustion engine 12 to cause the internal combustion engine 12 to reduce its torque. If, on the other hand, the estimated NOx emissions within the predetermined time period Δt is below the predetermined threshold limit 306, the processor device 502 is allowed to control S5 the internal combustion engine as prior to the estimation.

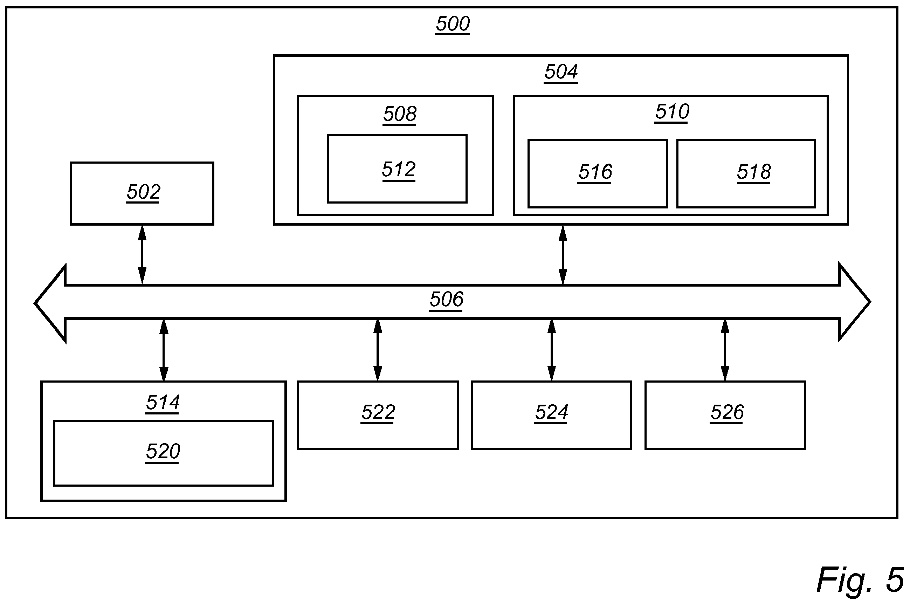

Turning now to Fig. 5, which is a schematic diagram of a computer system 500 for implementing examples disclosed herein. The computer system 500 is adapted to execute instructions from a computer-readable medium to perform these and/or any of the functions or processing described herein. The computer system 500 may be connected (e.g., networked) to other machines in a LAN, an intranet, an extranet, or the Internet. While only a single device is illustrated, the computer system 500 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 500 may comprise at least one computing device or electronic device capable of including firmware, hardware, and/or executing software instructions to implement the functionality described herein. The computer system 500 may include a processor device 502 (may also be referred to as a control unit), a memory 504, and a system bus 506. The computer system 500 may include at least one computing device having the processor device 502. The system bus 506 provides an interface for system components including, but not limited to, the memory 504 and the processor device 502. The processor device 502 may include any number of hardware components for conducting data or signal processing or for executing computer code stored in memory 504. The processor device 502 (e.g., control unit) may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processor device may further include computer executable code that controls operation of the programmable device.

The system bus 506 may be any of several types of bus structures that may further interconnect to a memory bus (with or without a memory controller), a peripheral bus, and/or a local bus using any of a variety of bus architectures. The memory 504 may be one or more devices for storing data and/or computer code for completing or facilitating methods described herein. The memory 504 may include database components, object code components, script components, or other types of information structure for supporting the various activities herein. Any distributed or local memory device may be utilized with the systems and methods of this description. The memory 504 may be communicably connected to the processor device 502 (e.g., via a circuit or any other wired, wireless, or network connection) and may include computer code for executing one or more processes described herein. The memory 504 may include non-volatile memory 508 (e.g., read-only memory (ROM), erasable programmable read-only memory (EPROM), electrically erasable programmable read-only memory (EEPROM), etc.), and volatile memory 510 (e.g., random-access memory (RAM)), or any other medium which can be used to carry or store desired program code in the form of machine-executable instructions or data structures and which can be accessed by a computer or other machine with a processor device 502. A basic input/output system (BIOS) 512 may be stored in the non-volatile memory 508 and can include the basic routines that help to transfer information between elements within the computer system 500.

The computer system 500 may further include or be coupled to a non-transitory computer-readable storage medium such as the storage device 514, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 514 and other drives associated with computer-readable media and computer-usable media may provide non-volatile storage of data, data structures, computer-executable instructions, and the like.

A number of modules can be implemented as software and/or hard-coded in circuitry to implement the functionality described herein in whole or in part. The modules may be stored in the storage device 514 and/or in the volatile memory 510, which may include an operating system 516 and/or one or more program modules 518. All or a portion of the examples disclosed herein may be implemented as a computer program product 520 stored on a transitory or non-transitory computer-usable or computer-readable storage medium (e.g., single medium or multiple media), such as the storage device 514, which includes complex programming instructions (e.g., complex computer-readable program code) to cause the processor device 502 to carry out the steps described herein. Thus, the computer-readable program code can comprise software instructions for implementing the functionality of the examples described herein when executed by the processor device 502. The processor device 502 may serve as a controller or control system for the computer system 500 that is to implement the functionality described herein.

The computer system 500 also may include an input device interface 522 (e.g., input device interface and/or output device interface). The input device interface 522 may be configured to receive input and selections to be communicated to the computer system 500 when executing instructions, such as from a keyboard, mouse, touch-sensitive surface, etc. Such input devices may be connected to the processor device 502 through the input device interface 522 coupled to the system bus 506 but can be connected through other interfaces such as a parallel port, an Institute of Electrical and Electronic Engineers (IEEE) 1394 serial port, a Universal Serial Bus (USB) port, an IR interface, and the like. The computer system 500 may include an output device interface 524 configured to forward output, such as to a display, a video display unit (e.g., a liquid crystal display (LCD) or a cathode ray tube (CRT)). The computer system 500 may also include a communications interface 526 suitable for communicating with a network as appropriate or desired.

### EXAMPLE LIST

Example 1. A computer system comprising a processor device configured to monitor a current level of NOx emissions exhausted from an aftertreatment system of an engine system of a vehicle, estimate a level of NOx emissions exhausted from the aftertreatment system within a predetermined time period based on an operating condition of the engine system of the vehicle, and in response to the estimated level of NOx emissions exceeding a predetermined threshold limit: transmit first operation data to an electric traction motor of the vehicle, the first operation data represents instructions to the electric traction motor to generate a propulsion torque on at least one wheel of the vehicle, and contemporaneously transmit second operation data to an internal combustion engine of the engine system, the second operation data represents instructions to reduce a torque generated by the internal combustion engine.

Example 2. A computer-implemented method, comprising: monitoring, by a processor device of a computer system, a current level of NOx emissions exhausted from an aftertreatment system of an engine system of a vehicle, estimating, by the processor device, a level of NOx emissions exhausted from the aftertreatment system within a predetermined time period based on an operating condition of the engine system of the vehicle, and in response to the estimated level of NOx emissions exceeding a predetermined threshold limit: transmitting, by the processor device, first operation data to an electric traction motor of the vehicle, the first operation data represents instructions to the electric traction motor to generate a propulsion torque on at least one wheel of the vehicle, and contemporaneously transmitting, by the processor device, second operation data to an internal combustion engine of the engine system, the second operation data represents instructions to reduce a torque generated by the internal combustion engine.

Example 3. The computer-implemented method of example 2, wherein the second operation data represents instructions to reduce the torque by the internal combustion engine at a torque level corresponding to a level of propulsion torque generated by the electric traction motor.

Example 4. The computer-implemented method of any one of examples 2 or 3, wherein the second operation data represents instructions to reduce the torque by the internal combustion engine to zero.

Example 5. The computer-implemented method of any one of examples 2-4, wherein the estimated level of NOx emissions is determined by determining, by the processor device, a level of NOx emissions exhausted from the aftertreatment system at an incremental point in time after the current point in time, determining, by the processor device, a derivative value of the increase of NOx emissions from the current point in time to the incremental point in time, and estimating, by the processor device, the level of NOx emissions exhausted from the aftertreatment system within the predetermined time period based on the derivative value.

Example 6. The computer-implemented method of any one of examples 2-5, further comprising determining, by the processor device, a topography of an upcoming road to be travelled by the vehicle during the predetermined time period, and estimating, by the processor device, the level of NOx emissions exhausted from the aftertreatment system within the predetermined time period based the topography.

Example 7. The computer-implemented method of example 6, further comprising estimating, by the processor device, a torque level of the internal combustion for operating the vehicle at the topography of the upcoming road at a desired vehicle speed, and estimating, by the processor device, the level of NOx emissions exhausted from the aftertreatment system within the predetermined time period based the torque level at the upcoming road.

Example 8. The computer-implemented method of any one of examples 2 - 7, wherein the engine system comprises a NOx sensor arranged in the aftertreatment system, the current level of NOx emissions being based on data received by the processor device from the NOx sensor.

Example 9. The computer-implemented method of any one of examples 2 - 8, wherein the aftertreatment system comprises a selective catalytic reduction arrangement.

Example 10. The computer-implemented method of examples 8 and 9, wherein the NOx sensor is arranged upstream the selective catalytic reduction arrangement.

Example 11. The computer-implemented method of example 10, wherein the estimated level of NOx emissions exhausted from the aftertreatment system within the predetermined time period is based on sensor data received from the NOx sensor in combination with an amount of reducing agent provided in the selective catalytic reduction arrangement.

Example 12. The computer-implemented method of any one of examples 2 - 7, wherein the current level of NOx emissions is derived from a current torque and rotational speed of the internal combustion engine.

Example 13. The computer-implemented method of any one of examples 2 - 12, wherein the operating condition of the engine system comprises torque and rotational speed of the internal combustion engine.

Example 14. The computer-implemented method of any one of examples 2 - 13, further comprising receiving, by the processing device, a conversion ratio of nitric oxides to nitrogen dioxides by an oxidation catalyst of the aftertreatment system.

Example 15. The computer-implement method of example 14, wherein the conversion ratio is received from a computer model and associated with an exhaust gas condition of the combustion gas from the internal combustion engine.

Example 16. A vehicle comprising a processor device configured to perform the method of any of examples 2-15.

Example 17. A computer program product comprising program code for performing, when executed by a processor device, the method of any of examples 2-15.

Example 18. A control system comprising one or more control units configured to perform the method of any of examples 2-15.

Example 19. A non-transitory computer-readable storage medium comprising instructions, which when executed by a processor device, cause the processor device to perform the method of any of cl examples 2-15.

The operational steps described in any of the exemplary aspects herein are described to provide examples and discussion. The steps may be performed by hardware components, may be embodied in machine-executable instructions to cause a processor to perform the steps, or may be performed by a combination of hardware and software. Although a specific order of method steps may be shown or described, the order of the steps may differ. In addition, two or more steps may be performed concurrently or with partial concurrence.

The terminology used herein is for the purpose of describing particular aspects only and is not intended to be limiting of the inventive concept. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A computer system comprising a processor device configured to:
- monitor a current level of NOx emissions exhausted from an aftertreatment system of an engine system of a vehicle,
- estimate a level of NOx emissions exhausted from the aftertreatment system within a predetermined time period based on an operating condition of the engine system of the vehicle, and in response to the estimated level of NOx emissions exceeding a predetermined threshold limit:
- transmit first operation data to an electric traction motor of the vehicle, the first operation data represents instructions to the electric traction motor to generate a propulsion torque on at least one wheel of the vehicle, and contemporaneously
- transmit second operation data to an internal combustion engine of the engine system, the second operation data represents instructions to reduce a torque generated by the internal combustion engine.

2. A computer-implemented method, comprising:
- monitoring, by a processor device of a computer system, a current level of NOx emissions exhausted from an aftertreatment system of an engine system of a vehicle,
- estimating, by the processor device, a level of NOx emissions exhausted from the aftertreatment system within a predetermined time period based on an operating condition of the engine system of the vehicle, and in response to the estimated level of NOx emissions exceeding a predetermined threshold limit:
- transmitting, by the processor device, first operation data to an electric traction motor of the vehicle, the first operation data represents instructions to the electric traction motor to generate a propulsion torque on at least one wheel of the vehicle, and contemporaneously
- transmitting, by the processor device, second operation data to an internal combustion engine of the engine system, the second operation data represents instructions to reduce a torque generated by the internal combustion engine.

3. The computer-implemented method of claim 2, wherein the second operation data represents instructions to reduce the torque by the internal combustion engine at a torque level corresponding to a level of propulsion torque generated by the electric traction motor.

4. The computer-implemented method of any one of claims 2 or 3, wherein the second operation data represents instructions to reduce the torque by the internal combustion engine to zero.

5. The computer-implemented method of any one of claims 2-4, wherein the estimated level of NOx emissions is determined by:
- determining, by the processor device, a level of NOx emissions exhausted from the aftertreatment system at an incremental point in time after the current point in time,
- determining, by the processor device, a derivative value of the increase of NOx emissions from the current point in time to the incremental point in time, and
- estimating, by the processor device, the level of NOx emissions exhausted from the aftertreatment system within the predetermined time period based on the derivative value.

6. The computer-implemented method of any one of claims 2-5, further comprising:
- determining, by the processor device, a topography of an upcoming road to be travelled by the vehicle during the predetermined time period, and
- estimating, by the processor device, the level of NOx emissions exhausted from the aftertreatment system within the predetermined time period based the topography.

7. The computer-implemented method of claim 6, further comprising:
- estimating, by the processor device, a torque level of the internal combustion for operating the vehicle at the topography of the upcoming road at a desired vehicle speed, and
- estimating, by the processor device, the level of NOx emissions exhausted from the aftertreatment system within the predetermined time period based the torque level at the upcoming road.

8. The computer-implemented method of any one of claims 2-7, wherein the engine system comprises a NOx sensor arranged in the aftertreatment system, the current level of NOx emissions being based on data received by the processor device from the NOx sensor.

9. The computer-implemented method of any one of claims 2-7, wherein the current level of NOx emissions is derived from a current torque and rotational speed of the internal combustion engine.

10. The computer-implemented method of any one of claims 2-9, further comprising:
- receiving, by the processing device, a conversion ratio of nitric oxides to nitrogen dioxides by an oxidation catalyst of the aftertreatment system.

11. The computer-implement method of claim 10, wherein the conversion ratio is received from a computer model and associated with an exhaust gas condition of the combustion gas from the internal combustion engine.

12. A vehicle comprising a processor device configured to perform the method of any of claims 2-11.

13. A computer program product comprising program code for performing, when executed by a processor device, the method of any of claims 2-11.

14. A control system comprising one or more control units configured to perform the method of any of claims 2-11.

15. A non-transitory computer-readable storage medium comprising instructions, which when executed by a processor device, cause the processor device to perform the method of any of claims 2 - 11.
